# EUROPEAN PATENT SPECIFICATION

(11) **EP 2 834 312 B1**
(45) Date of publication and mention of the grant of the patent: **29.07.2020**
(21) Application number: 13716252.5
(22) Date of filing: 04.04.2013
(51) Int. Cl.: C09D 183/04

(54) **PROTECTING SUBSTRATES AGAINST DAMAGE BY FIRE**
SCHUTZ VON SUBSTRATEN VOR BRANDSCHÄDEN
PROTECTION DE SUBSTRATS CONTRES DES DOMMAGES DUS AUX INCENDIES

(30) Priority: 05.04.2012 GB 201206262
(43) Date of publication of application: 11.02.2015
(73) Proprietor: Dow Silicones Corporation, Midland, MI 48686-0994 (US)
(72) Inventor: DUQUESNE, Sophie, 59350 Saint-Andrez-Lille (FR); BOURBIGOT, Serge, 59652 Villeneuve d'Ascq cedex (FR); GARDELLE, Bastien, 92552 Saint Cloud (FR); VANDEREECKEN, Patrick, 1490 Court-Saint-Etienne (BE)
(74) Representative: Donlan, Andrew Michael
(86) International application number: PCT/EP2013/057149
(87) International publication number: WO 2013/150121

(56) References cited:
- WO-A1-2010/054984
- JP-A- 2010 059 298

## Description

This invention relates to protecting a metal, wood, masonry or plastics substrate against damage by fire by coating the substrate with an intumescent composition. In particular the invention relates to protecting the substrate against fire damage from burning hydrocarbons. Fire damage from burning hydrocarbons is assessed by the Underwriters' Laboratories UL1709 test, which describes a test method measuring the resistance of protective materials to rapid-temperature-rise fires. The test method covers a full-scale fire exposure and is intended to evaluate the thermal resistance of protective material applied to structural members and the ability of the protective material to withstand the fire exposure. The intumescent compositions of the invention have benefit in all fire scenarios covered by UL1709.

Various intumescent coatings for protecting substrates against damage by fire are described in "Fire-Protective and Flame-Retardant Coatings - A State-of-the-Art Review" by E. D. Weil in Journal of Fire Sciences 2011 29: 259. An intumescent coating acts in a hydrocarbon fire or in a different scenario (ISO834 for example) to insulate the substrate, thereby substantially extending the time before the substrate is damaged by the fire.

US-A-4694030 describes intumescent polysiloxane moulding compositions containing expandable graphite compounds.

WO-A-2010/054984 describes an intumescent composition comprising a polysiloxane and optionally an organic resin, and a spumific agent and a char forming adjunct. Either the polysiloxane or the organic resin contains an epoxy, amine, mercaptan, carboxylic acid, acryloyl, isocyanate, alkoxysilyl or anhydride functional group. The composition contains a compound capable of reacting with, or catalysing the reaction between, the functional groups. All examples include combinations of organic and functional silicone resins.

US-A-5262454 describes a flame resistant hardenable polyorganosiloxane compound containing 2 to 40% hollow glass balls and 3 to 50% of an inorganic intumescent compound which expands at 80 to 250°C, such as expandable graphite.

A process according to the present invention for protecting a metal, wood or plastics substrate exposed to fire risk from hydrocarbons comprises coating the substrate with an intumescent composition comprising a polydimethylsiloxane (A) of degree of polymerisation at least 300 siloxane units, said polydimethylsiloxane containing reactive hydroxyl or hydrolysable groups bonded to silicon, and a crosslinking agent (B) containing hydrolysable groups reactive with the reactive groups of (A) in the presence of moisture, expandable graphite and a titanate catalyst for the reaction between the reactive hydroxyl or hydrolysable groups of polydimethylsiloxane (A) and the crosslinking agent (B), characterized in that the composition commprises mineral fibres and also comprises at least a silica and/or clay or a nanocomposite clay and further characterized in that the composition does not contain an organic polymer or an organic resin.

We have found that the combination of a curable polydimethylsiloxane with expandable graphite provides an intumescent coating which on exposure to fire expands to an essentially inorganic insulating char layer which protects a substrate. The coating of the present invention has the particular advantage that when it expands on exposure to fire, it emits little smoke and has very low smoke opacity compared to formulations containing organic resins.

The composition used in the process does not contain any organic polymer or organic resin (i.e. polymers wherein the majority of the polymer backbone are based on carbon -carbon bonds) such as, polyamides, nylons, polyesters, epoxy resins, ABS combinations, halogenated polymers such as poly (vinyl chloride) (PVC), polyethylenes, polypropylenes, polyurethanes, polyacrylates/polymethacrylates (homo-and copolymers), polystyrenes, polychlopropene, phenolics, and co-polymers thereof.

The polydimethylsiloxane (A) generally contains at least two hydroxyl or hydrolysable groups, preferably terminal hydroxyl or hydrolysable groups. The polymer can for example have the general formula:

X¹-A'-X² (1)

where X¹ and X² are independently selected from silicon containing groups which contain hydroxyl or hydrolysable substituents and A' represents a polydimethylsiloxane polymer chain. Examples of X¹ or X² groups incorporating hydroxyl and/or hydrolysable substituents include groups terminating as described below:
-Si(OH)₃, -(R^{a})Si(OH)₂, -(R^{a})₂SiOH, -(R^{a})Si(OR^{b})₂, -Si(OR^{b})₃, -(R^{a})₂SiOR^{b} or -(R^{a})₂Si-R^{c}-SiR^{d}ₚ(OR^{b})₃₋ₚ where each R^{a} independently represents a monovalent hydrocarbyl group, for example, an alkyl group, in particular having from 1 to 8 carbon atoms, (and is preferably methyl); each R^{b} and R^{d} group is independently an alkyl or alkoxy group in which the alkyl groups suitably have up to 6 carbon atoms; R^{c} is a divalent hydrocarbon group e.g. - CH₂- CH₂-, - CH₂- CH₂- CH₂- , - CH₂- CH₂- CH₂- CH₂, or - CH₂- CH₂- CH₂- CH- CH₂- CH₂- and the like, which may be interrupted by one or more siloxane spacers having up to six silicon atoms; and p has the value 0, 1 or 2.

Hydroxy-terminated polydimethylsiloxanes are widely used in sealants and are suitable for use in the present invention. The polydimethylsiloxane (A) has a degree of polymerisation at least 300 siloxane units and may have a viscosity of up to 20,000,000 mPa.s, at 25°C (viscosity method: cone/plate rheometer CP-52 at a speed of 5 RPM) and may contain up to or even more than 200,000 dimethylsiloxane units. The polydimethylsiloxane (A) is preferably a fluid having a degree of polymerisation of 300 to 10,000 siloxane units.

The pendant groups in the polydimethylsiloxane are preferably all methyl groups, but a minor proportion, for example up to a maximum of 10%, may be other groups such as phenyl or alkyl groups having 2 to 6 carbon atoms e.g. ethyl groups. The polydimethylsiloxane may contain pendant organic functional groups such as aminoalkyl, hydroxyalkyl, carboxyalkyl or epoxyalkyl groups but is preferably free from such organic functional groups. The polydimethylsiloxane is substantially linear; the molar ratio of pendant group to silicon atoms is generally from 1.9:1 to 2.1:1.

The polydimethylsiloxane is preferably present in the intumescent coating composition at, at least 25% by weight, more preferably at least at 40 or at 50%, up to 90% by weight, more preferably up to 80%. Hence it may be present in a range of from 25% to 90% by weight of the intumescent composition, alternatively 25% to 80%, alternatively 40% to 80%, alternatively 50% to 80% in each case by weight of the total weight of the intumescent composition (i.e. 100%)

The crosslinking agent (B) preferably contains at least two and preferably at least three groups reactive with the silicon-bonded hydroxyl or hydrolysable groups of polymer (A). The reactive groups of crosslinking agent (B) are themselves preferably silanol groups or silicon bonded hydrolysable groups, most preferably hydrolysable groups. The crosslinking agent can for example be a silane or short chain organopolysiloxane, for example a polydiorganosiloxane having from 2 to about 100 siloxane units. The molecular structure of such an organopolysiloxane can be straight chained, branched, or cyclic. The crosslinking agent (B) can alternatively be an organic polymer substituted by silicon-bonded hydrolysable groups.

The hydrolysable groups in the crosslinking agent can for example be selected from acyloxy groups (for example, acetoxy, octanoyloxy, and benzoyloxy groups); ketoximino groups (for example dimethyl ketoximo, and isobutylketoximino); alkoxy groups (for example methoxy, ethoxy, and propoxy) and/or alkenyloxy groups (for example isopropenyloxy and 1-ethyl-2-methylvinyloxy).

When the crosslinking agent (B) is a silane having three silicon-bonded hydrolysable groups per molecule, the fourth group is suitably a non-hydrolysable silicon-bonded organic group. These silicon-bonded organic groups are suitably hydrocarbyl groups which are optionally substituted by halogen such as fluorine and chlorine. Examples of such fourth groups include alkyl groups (for example methyl, ethyl, propyl, and butyl); cycloalkyl groups (for example cyclopentyl and cyclohexyl); alkenyl groups (for example vinyl and allyl); aryl groups (for example phenyl, and tolyl); aralkyl groups (for example 2-phenylethyl) and groups obtained by replacing all or part of the hydrogen in the preceding organic groups with halogen. Preferably the fourth silicon-bonded organic group is methyl or ethyl.

Examples of crosslinking agents (B) include acyloxysilanes, particularly acetoxysilanes such as methyltriacetoxysilane, vinyltriacetoxysilane, ethyl triacetoxysilane, di-butoxy diacetoxysilane and/or dimethyltetraacetoxydisiloxane, and also phenyl-tripropionoxysilane. The crosslinking agent can be an oxime-functional silane such as methyltris(methylethylketoximo)silane, vinyl-tris(methylethylketoximo)silane, or an alkoxytrioximosilane. The crosslinking agent can be an alkoxysilane, for example an alkyltrialkoxysilane such as methyltrimethoxysilane, methyltriethoxysilane, 2-methylpropyltrimethoxysilane or ethyltrimethoxysilane, an alkenyltrialkoxysilane such as vinyltrimethoxysilane or vinyltriethoxysilane, or phenyltrimethoxysilane, 3,3,3-trifluoropropyltrimethoxysilane, or ethylpolysilicate, n-propylorthosilicate, ethylorthosilicate, or an alkenyloxysilane such as methyltris(isopropenoxy)silane or vinyltris(isopropenoxy)silane.

The crosslinking agent can alternatively be a short chain polydiorganosiloxane, for example polydimethylsiloxane, end-blocked with trimethoxysilyl groups or can be an organic polymer, for example a polyether such as polypropylene oxide, end-blocked with methoxysilane functionality such as trimethoxysilyl groups. The crosslinking agent used may also comprise any combination of two or more of the above.

The crosslinking agent is usually present in an amount of at least about 0.5% by weight based on the polydimethylsiloxane, more preferably at least 1% and most preferably at least 5%. The crosslinking agent can be present at up to 50% by weight based on the polydimethylsiloxane, more preferably up to 35% and most preferably up to 30%. Hence, the crosslinking agent is present in a range of 0.5% to 50% by weight alternatively 1% to 35% by weight, alternatively 5 to 30% by weight, alternatively 10 to 25% by weight, each alternative being based on the weight of the polydimethylsiloxane present in the Intumescent composition. Intumescent compositions containing 10 to 25% crosslinking agent by weight based on the polydimethylsiloxane have been particularly successful in hydrocarbon fire tests.

The intumescent composition additionally contains a catalyst for the reaction between the reactive hydroxyl or hydrolysable groups of polydimethylsiloxane (A) and the crosslinking agent (B). Preferred catalysts include titanates such as titanium tetraethoxide or titanium tetraisopropoxide and chelated titanium compounds such as diisopropoxytitanium bis (ethylacetoacetate). The catalyst may be present at about 0.1 to 5% by weight based on the polydimethylsiloxane. We have found that intumescent coatings containing a titanate catalyst give a high level of fire protection more reliably than intumescent coatings using no catalyst or a tin catalyst; this appears to be because of better interaction between the expandable graphite and the silicone matrix as the graphite expands in the fire test conditions.

The intumescent coating composition contains expandable graphite as intumescent agent (sometimes called spumific agent), that is as a material which expands when heated under fire circumstances. Expandable graphites are graphites in which the interstitial layers contain foreign groups (for example sulfuric acid) which lead to thermal expansion. They include nitrosated, oxidised and halogenated graphites. The expandable graphite expands when in a temperature range of from 80°C to 250°C or more, expanding the intumescent composition so that it forms an insulating char layer on the substrate. One example of a suitable expandable graphite is sold by Graphitwerk Kropfmuehl AG under the trade name 'ES350F5'.

The expandable graphite is preferably present in the intumescent coating composition at at least 3% by weight, more preferably at least 5 or 7%, up to 40% by weight, more preferably up to 20 or 25%. Hence it may be present in a range of from 5% to 40%, alternatively 7% to 40%, alternatively, 7% to 20%, alternatively 7% to 25% in each case by weight of the total weight of the intumescent composition (i.e. 100%)

We have found according to the invention that the combination of expandable graphite with a polydimethylsiloxane binder is particularly effective in forming an insulating char layer when exposed to a hydrocarbon fire. The intumescent coating composition of the invention also expands to form a cohesive char when exposed to other fires such as a cellulosic fire, but is no more effective than commercially available intumescent coating compositions in protecting substrates against cellulosic fires. Surprisingly we have found that the intumescent coating composition of the invention is more effective than commercially available intumescent coating compositions (which are usually based on organic resin with epoxy functionalities) in protecting substrates against hydrocarbon fires. The intumescent coating composition of the invention also has the advantage that it generates only a low smoke intensity compared to commercially available intumescent coating compositions.

The intumescent coating composition of the invention may contain other intumescent agents in addition to the expandable graphite. One example of such an intumescent agent is ammonium polyphosphate. A suitable ammonium polyphosphate is sold by Clariant under the trade mark 'Exolit® AP750'; this ammonium polyphosphate is a non-halogenated flame retardant which develops its effectiveness through phosphorus/nitrogen synergism. Any such additional intumescent agent is preferably present in no greater amount (by weight) than the expandable graphite.

The intumescent coating composition may contain silica, particularly silica which has been surface treated with a silane and/or an organopolysiloxane fluid, such as that sold by Dow Corning under the trade mark 'Dow Corning® 4-7081 resin modifier'. We have found that such treated silica can enhance the fire protection performance of the intumescent composition by enhancing the foam formation.

The treated silica such as 'Dow Corning 4-7081 resin modifier' can be present in the intumescent coating composition at up to 20% by weight, for example at 2 to 10 or alternatively 2 to 15% by weight of the total weight of the intumescent composition (i.e. 100%) . The treated silica can advantageously be used in conjunction with a silicone resin, for example a silsesquioxane resin.

The intumescent coating composition may contain a silicone resin. By a silicone resin we mean a polysiloxane having a highly branched structure with a molar ratio of silicon-bonded organic groups to silicon atoms of less than 1.5:1, such as a silsesquioxane resin. The silicone resin can be a methyl silsesquioxane but is preferably an aryl silsesquioxane such as a phenyl silsesquioxane. We have found a hydroxy-terminated phenyl silsesquioxane resin such as that sold by Dow Corning under the trade mark 'Dow Corning® 217 flake' to be particularly effective.

The silicone resin, if used, either alone or in combination with treated silica as discussed above can be present in the intumescent coating composition at up to 30% by weight, for example at 4 to 20% by weight of the total weight of the intumescent composition (i.e. 100%).

The intumescent coating composition may contain at least one inorganic filler besides the mineral fibres. The filler can for example include a boron compound, a fibrous filler and/or a reinforcing filler.

A preferred boron compound is zinc borate. Boric acid and/or ammonium tetraborate can additionally or alternatively be present. The boron compound, if used, can be present in the intumescent coating composition at up to 25% by weight, for example at 3 to 20% by weight of the total weight of the intumescent composition (i.e. 100%).

The composition comprises mineral fibres, particularly refractory fibres. Suitable refractory fibres are for example sold by Distrisol under the trade mark 'Isofrax 1200C'. Also suitable are mineral fibres sold by Lapinus under the trade mark 'Rock Force MS603'. A fibrous filler, if used, can be present in the intumescent coating composition at up to 20% by weight, for example at 2 to 10 or 2 to 15% by weight of the total weight of the intumescent composition (i.e. 100%).

The intumescent coating composition may contain one or more mineral fillers which may be reinforcing or non-reinforcing. Examples of suitable reinforcing fillers include fumed silica, precipitated calcium carbonate or carbon black. Silicon carbide is a further mineral filler which may augment the performance of the coating in a fire. Silica, for example the 'Dow Corning® 4-7081 resin modifier' described above, is also a mineral filler. The intumescent coating composition may additionally or alternatively contain a less reinforcing or non-reinforcing filler such as talc, ground calcium carbonate or a clay e.g. a nanocomposite clay such as that sold by Southern Clay Products under the trade mark 'cloisite 30B'. When present silica is present in the range given above (up to 20%). Other mineral fillers can be present in the intumescent coating composition at up to 50% by weight, for example at 2 to 20 or 2 to 30% by weight of the total weight of the intumescent composition (i.e. 100%). We have found that within this range the more highly filled compositions give lower smoke opacity while the less highly filled compositions form a mechanically stronger char. Reinforcing and non reinforcing fillers can also be combined. The total amount of fillers in the composition is preferably less than 60% by weight, for example 10 to 50% by weight. Preferably the cumulative weight of fillers and intumescent agents (including expandable graphite) is a maximum of 60% of the weight of the composition.

The intumescent coating composition may contain one or more other flame retardant (FR) additives. Ammonium polyphosphate, for example, Exolit AP750 from Clariant described above is also a FR additive. One preferred FR is an aluminium phosphinate, for example that sold by Clariant (under the trade name Exolit OP). The aluminium phosphinate may contribute to the fire resistant properties of the intumescent coating by increasing the cohesion of the expended char. Further examples of suitable FR agents include aluminium trihydroxide or magnesium dihydroxide. When present, such FR additives are preferably present in the intumescent coating composition at up to 30% by weight, for example at 2 to 20% by weight of the total weight of the intumescent composition (i.e. 100%).

Compositions which fall within the scope of this disclosure must add up to 100% weight %. Hence, when the composition consists of components (A), (B) and the expanded graphite, the expanded graphite is present in an amount greater than 3%, for example 7%, alternatively 9% by weight of the composition but amounts of the 3 components must add up to 100%. The expandable graphite may only be present in amounts as low as 3% as specified above when other ingredients, particularly filler, other intumescent agents and/or flame retardant additives are present and the total composition is 100 weight %.

In one embodiment of the invention there is provided a process according to the present invention for protecting a metal, wood or plastics substrate exposed to fire risk from hydrocarbons comprises coating the substrate with an intumescent composition comprising of a polydimethylsiloxane (A) of degree of polymerisation at least 300 siloxane units, said polydimethylsiloxane containing reactive hydroxyl or hydrolysable groups bonded to silicon, and a crosslinking agent (B) containing hydrolysable groups reactive with the reactive groups of (A) in the presence of moisture, expandable graphite, a titanate catalyst, mineral fibres and also at least a silica and/or clay or nanocomposite clay, further characterized in that the composition does not contain an organic polymer or an organic resin, and optionally one or more additives selected from the list of one or more additional intumescent agents such as silica, a silicone resin, inorganic fillers such as a boron compound, a fibrous filler and/or a reinforcing filler, and/or one or more flame retardants, which composition does not contain an organic polymer or an organic resin.

In one embodiment of the invention there is provided a process according to the present invention for protecting a metal, wood or plastics substrate exposed to fire risk from hydrocarbons comprises coating the substrate with an intumescent composition consisting of a polydimethylsiloxane (A) of degree of polymerisation at least 300 siloxane units, said polydimethylsiloxane containing reactive hydroxyl or hydrolysable groups bonded to silicon, and a crosslinking agent (B) containing hydrolysable groups reactive with the reactive groups of (A) in the presence of moisture, expandable graphite, a titanate catalyst, mineral fibres and also at least a silica and/or clay or nanocomposite clay, further characterized in that the composition does not contain an organic polymer or an organic resin, and optionally one or more additives selected from the list of one or more additional intumescent agents such as silica, a silicone resin, inorganic fillers such as a boron compound, a fibrous filler and/or a reinforcing filler, and/or one or more flame retardants.

For example any of the above intumescent coating compositions may, exclusive of additives if present, comprise from 25 weight (wt) % to 90 wt % by weight of polydimethylsiloxane (A) 0.5 wt % to 50 wt % crosslinking agent (B) and from 3 wt % to 40 wt % expandable graphite and 0.1 wt % to 5 wt % of a titanate catalyst with the total adding up to 100 wt%.

In a further alternative any of the above intumescent coating compositions may, exclusive of additives if present, comprise from 40 weight (wt) % to 80 wt % by weight of polydimethylsiloxane (A) 5 wt % to 30 wt % crosslinking agent (B) and from 7 wt % to 25 wt % expandable graphite and 0.1 wt % to 5 wt % of a titanate catalyst with the total adding up to 100 wt%.

In a further alternative any of the above intumescent coating compositions may, exclusive of additives if present, comprise any combination of the ranges discussed above providing the total adding up to 100 wt%.

The composition comprises at least a silica and/or clay or nanocomposite clay.

The intumescent coating composition can be prepared by mixing the fluid polydimethylsiloxane with the expandable graphite and other solid ingredients such as silicone resin, silica and fillers in a suitable apparatus to disperse the expandable graphite and other solid ingredients in the polydimethylsiloxane, for example a colloid mill or ball mill.

The intumescent coating composition can be applied to the substrate by known methods, for example by trowel or by spray. The coating is usually applied at a thickness of 0.3 to 5.0 mm. preferably 0.5 to 2.0 mm. The coating is preferably applied as a solventless composition although it can be applied from solution in a volatile solvent, for example a hydrocarbon solvent, if required for spray application.

The intumescent coating composition of the invention is usually applied to metal substrates, particularly steel substrates, but can also be applied to substrates of plastics material, wood or masonry such as concrete or brick. It can for example be applied to any structures used for the production or storage of liquid hydrocarbons, or buildings or structures in which hydrocarbon fuel is used or for which regulations require resistance to UL1709 fire scenarios, and in vehicles containing liquid hydrocarbon fuel, or to substrate materials intended for use in such structures and vehicles. Examples of substrates where the intumescent coating composition has great advantage include structural steel in oil exploration rigs and oil production platforms, bulkheads in ships, particularly tankers carrying hydrocarbons, vessels and buildings used for oil storage and in building constructions generally. The intumescent coating reduces the rate of temperature increase of the substrate in a hydrocarbon fire, thus delaying or preventing the collapse of the structure of which the substrate forms part. The intumescent coating is generally applied to the surface of the substrate most likely to be exposed to hydrocarbon fire, and the effectiveness of the intumescent coating is generally measured by measuring the temperature of the back of the substrate, that is the face of the substrate remote from the fire (and from the intumescent coating) which is hereafter referred to as the "back face".

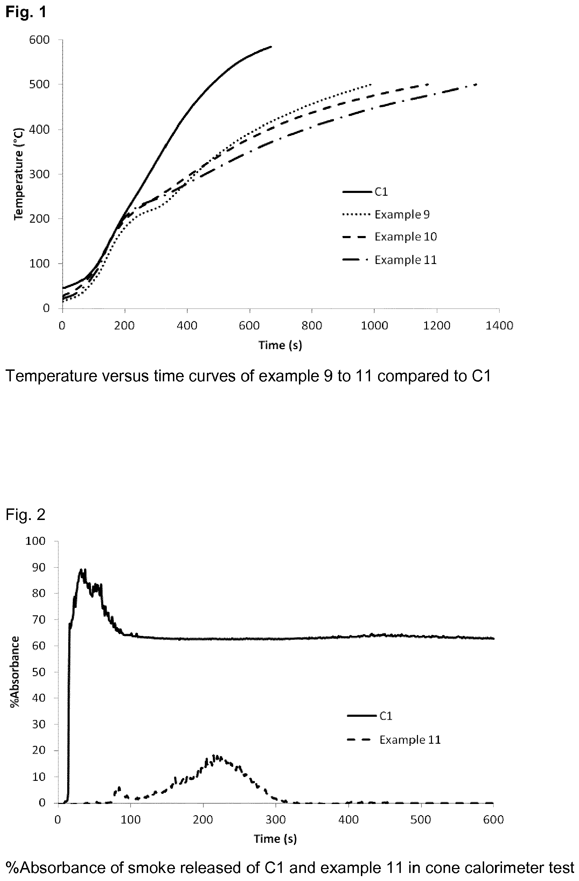

The invention is illustrated by the following Examples, in which parts and percentages are by weight, T is the back face temperature and all viscosities given are measured at 25°C unless otherwise indicated. The Examples are described in tables 1, 3 and 4 and test results are given in tables 2 and 5 and Figures 1 and 2, in which:
- Figure 1 is a graph showing the fire test results of Examples 9 to 11 and comparative example C1; and
- Figure 2 illustrates the smoke opacity of example C1 and example 11 tested in cone calorimeter at 50kW/m².
- Figure 3 depicts the Experimental set up utilized to determinate the mechanical properties of char.
- Figure 4 is a graphical representation of the Temperature versus time curves of Examples 12 and 13 in a hydrocarbon fire scenario (UL1709).
- Figure 5 shows the Char of a) Example 12 and b) Example 13 based coating after air jet
- Figure 6 shows the Temperature versus time curve of example 14 and 15 in hydrocarbon fire scenario (UL1709)
- Figure 7 depicts a) Example 14 residue and b) Example 15 residue after the Air jet test

### Reference Examples 1 to 3

Intumescent coating compositions having the formulations shown in Table 1 were prepared by compounding a flowable alkoxy sealant (hereafter referred to as "FAS") and the solid ingredients listed below in a colloid mill at ambient temperature. The flowable alkoxy sealant comprised, based on the total weight of the composition:
- 47% of a silanol-terminated polydimethylsiloxane of degree of polymerisation (DP) about 1000 siloxane units,
- 14% of a 100 centiStokes (viscosity method: cone/plate rheometer CP-52 5rpm).
- trimethylsilyl terminated polydimethylsiloxane,
- 34% of stearic acid treated calcium carbonate,
- 1% carbon black
about 4% of a mixture containing methyltrimethoxysilane crosslinking agent, diisopropoxytitanium bis (ethylacetoacetate) catalyst and an amino alkoxysilane used as adhesion promoter.

The solid ingredients used were:
- EG: expandable graphite (ES350F5 from Graphitwerk Kropfmuehl AG)
- AP 750: coated ammonium polyphosphate (Exolit AP 750 from Clariant)
- ZB: zinc borate (ZB from Borax)
- ATB: ammonium tetraborate from Sigma Aldrich
- MDH: magnesium di-hydroxide from Albermarle
- PCI255: aluminium phosphinate from Thor
- 217 flake: hydroxy-terminated phenyl silsesquioxane resin sold by Dow Corning under the trade mark 'Dow Corning® 217 flake'
- Mod 7081: silica which has been surface treated with a silane and polydimethylsiloxane fluid, sold by Dow Corning under the trade mark 'Dow Corning® 4-7081 resin modifier'

**Table 1**

| Example | 1 | 2 | 3 |
|---|---|---|---|
| FAS | 53% | 59% | 61% |
| EG | 5% | 9% | 7% |
| AP750 | - | - | 4% |
| ZB | - | - | 8% |
| Boric acid | 15% | - | - |
| ATB | - | 9% | - |
| MDH | - | 9% | 8% |
| AIP | - | - | 12% |
| 217 flake | 19% | 10% | - |
| Mod 7081 | 8% | 4% | - |

Each of the intumescent coating compositions was applied to a 10 cm x 10 cm x 3 mm steel plate cleaned before application with ethanol and primed with a few micrometer of Primer 1200 from Dow Corning to enhance the coating adhesion. The coating compositions were applied onto the steel plates at a thickness of 1.0mm. The coatings were allowed to cure at ambient temperature for one night.

The coated steel plates were tested in a furnace of internal volume 30dm³ heated by a propane burner of pressure 1.8 bar (1.8x 10⁵Pa). The propane flow was regulated in order to mimic the normalized temperature curve specified in the UL1709 underwriters test. The coated plates were arranged with the intumescent coating composition facing the burner and the temperature of the back face of each steel plate was monitored. The back face temperatures T in °C after 300, 400, 500 and 600 seconds are recorded in Table 2. The time taken for the back face to reach 400°C and 500°C is also recorded. For regular reinforcing steel, the temperature of 500°C has been officially adopted as a standard for normally loaded structure components whereas 400°C could be taken as failure temperature for highly loaded system, as the steel loses a substantial proportion of its strength at above 500°C. The back face of an uncoated steel plate took 240 seconds to reach 500°C under the test conditions.

In a comparative test C1, a steel plate was coated with a 1.0 mm thick layer of a commercial epoxy based intumescent paint (Fire Tex M93 supplied by Leights Paints) applied and cured in accordance with supplier's instructions.

**Table 2**

| Example | C1 | 1 | 2 | 3 |
|---|---|---|---|---|
| T after 300 s | 340°C | 350°C | 310°C | 280°C |
| T after 400 s | 440°C | 440°C | 390°C | 360°C |
| T after 500 s | 520°C | 520°C | 450°C | 420°C |
| T after 600 s | 570°C | 570°C | 490°C | 470°C |
| Time to 400°C | 360 s | 360 s | 430 s | 470 s |
| Time to 500°C | 470 sec | 470 sec | 642 sec | 732 sec |

As can be seen from Table 2, the intumescent coating compositions according to the invention of Examples 2 and 3 gave better fire protection to the steel than the commercial intumescent paint, and the composition of Example 1 gave equal protection compared to the commercial intumescent. In particular the coating compositions according to the invention of Examples 2 and 3 gave a substantially better performance in terms of time taken for the substrate to reach 400°C and 500°C.

### Reference Examples 4 to 8

Intumescent coating compositions having the formulations shown in Table 3 were produced following the procedure of Examples 1 to 3. SiC is silicon carbide and Isofrax 1200C is a fibrous refractory material supplied by Distrisol.

**Table 3**

| Example | 4 | 5 | 6 | 7 | 8 |
|---|---|---|---|---|---|
| FAS | 79% | 55% | 62% | 59% | 53% |
| EG | 11% | 7% | 10% | 9% | 5% |
| AP750 | - | - | 2% | - | - |
| ZB | - | 7% | 8% | 9% | - |
| Boric acid | - | - | - | - | 10% |
| MDH | - | 7% | 8% | 9% | |
| AIP | - | 10% | 10% | - | - |
| SiC | - | - | - | - | 5% |
| 217 flake | 8% | 10% | - | 10% | 19% |
| Mod 7081 | 2% | 4% | - | 4% | 8% |

Each of the compositions of Examples 4 to 8, when coated on a steel plate and allowed to cure at ambient temperature overnight, subsequently formed a coherent expanded char when exposed to fire in an analogous method to that described for the heating of examples 1 to 3.

### Reference Examples 9 to 11

Intumescent coating compositions having the formulations shown in Table 4 were prepared by compounding EG and optionally Mod 7081 with the ingredients listed below:
- PDMS: silanol-terminated polydimethylsiloxane of viscosity 12500 centiStokes at 25°C (viscosity method: cone/plate rheometer CP-52 5rpm)
- MTM: methyltrimethoxysilane (containing an aminosilane adhesion promoter
- TiCat: organotitanate catalyst
- Fibres: mineral fibres sold under the trade mark 'Lapinus Rock Force MS603'
- GCC: ground Calcium Carbonate
- Aerosil 200: fumed silica supplied by Degussa
- Cloisite 30B: clay mineral from Southern Clay

**Table 4**

| Example | 9 | 10 | 11 |
|---|---|---|---|
| PDMS | 67% | 67% | 44% |
| MTM | 7% | 7% | 5% |
| TiCat | 1% | 1% | 1% |
| EG | 25.0% | 22.0% | 22% |
| Cloisite 30B | - | 3% | - |
| Lapinus MS603Fibres | - | - | 2% |
| Aerosil 200 | - | - | 1% |
| GCC | | | 25% |

Each of the intumescent coating compositions was applied to a steel plate at a thickness of 1.0 mm and allowed to cure as described in Example 1. The coated steel plates were tested in a furnace as described in Example 1. The results are shown in Table 5 below and are also depicted graphically in Figure 1, with the test results on commercial intumescent composition C1 shown for comparison.

**Table 5**

| Example | C1 | 9 | 10 | 11 |
|---|---|---|---|---|
| T after 300s | 340°C | 223°C | 247°C | 244°C |
| T after 400s | 440°C | 283°C | 295°C | 280°C |
| T after 500s | 520°C | 345°C | 340°C | 315°C |
| T after 600s | 570°C | 392°C | 380°C | 350°C |
| T after 700s | - | 427°C | 411°C | 380°C |
| T after 900s | - | 481°C | 458°C | 428°C |
| T after 1200s | - | - | 505°C | 480°C |
| Time to 400°C | 360s | 620s | 660s | 780s |
| Time to 500°C | 470s s | 990s | 1180s | 1300s |

It can be seen from Table 5 and Figure 1 that the intumescent coatings of Examples 9, 10 and 11 were all better than the commercial intumescent coating in protecting the steel substrate in the hydrocarbon fire test.

The smoke opacity of example 11 and commercial intumescent composition C1 was tested in cone calorimeter at 50kW/m². In order to evaluate the smoke opacity, a Mass Loss Calorimeter was equipped with a Smoke Density Analyzer TRDA 302 from TAURUS. This equipment was placed at the end of the flue. The smoke density analyzer measures the light absorbance of the smoke emitted. The results are shown graphically in Figure 2. From figure 2, it can be observed that the maximum smoke opacity (linked with the higher absorbance) is significantly lower for the intumescent coating composition of example 11 compare to the commercial product C1.

The Steiner tunnel - standard ASTME84 - test is used to determine the relative burning behaviour of a test specimen by observing the flame spread along the specimen and recording the amount of smoke produced using a photoelectric cell and light source in the exhaust duct. The Flame Spread Index (FSI) considers both the ignition time and the distance that the flame front travels during the 10-minute test. The FSI is a relative number to an FSI of 0 for cement board, and an FSI equal to 100 for select grade red oak.

The Smoke Developed Index (SDI) is a comparative measure derived from smoke obscuration data collected during the test.

A laboratory's small scale tunnel test (1:8 model), made of refractory materials was used for this study. The proportions of the interior volume are respected compared to industrial scale test. The flame is fed with methane (gas flow: 0.74L/min) and the air flow inside the tunnel is 0.8 m/s.

PET foam based-composites are coated with 0.13g/cm² of C1 and example 11. SDI results in Table 6 demonstrate the strong decreased of smoke absorbance of example 11 compared to commercial intumescent paint (example C1).
The FSI is determined as follow: the total area (At) under the flame spread distance-time plate is calculated. In both cases, At is less than 97.5, so the FSI = 0.515*At.
The SDI corresponds to the area under the curve %Absorbance versus time.
Table 6 shows the better fire protection (lower FSI and SDI) of silicone based coating compared to Fire Tex M93.

**Table 6**

| Small scale Steiner tunnel results | | |
|---|---|---|
| Example | C1 | 11 |
| SDI | 45 | 20 |
| FSI | 15 | 5 |

Results demonstrate that both SDI and FSI of silicone based coating are better than commercial intumescent paint.

Examples 12 and 13 are provided to show that the use of titanate catalysts is preferred as they provide, surprisingly, improved fire performances in an hydrocarbon fire scenario (UL1709) and the mechanical properties of the char are improved when an organotitanate catalyst is used compared to tin catalysts for the curing the coating composition.

Examples 14 and 15 are provided to show that the addition of nanocomposite clays (such as Cloisite 30B) and/or fumed silica (such as Aerosil 200) and preferably the combination of the two further improves the fire performance and the mechanical properties of the silicone/expandable graphite char.

The compositions used in Examples 12 to 15 are provided in Table 7 with the compounds utilized being:
- PDMS-1: silanol-terminated polydimethylsiloxane of viscosity 80 CentiStokes at 25°C (viscosity method: cone/plate rheometer CP-52 5rpm)
- PDMS-2: silanol-terminated polydimethylsiloxane of viscosity 12500 CentiStokes at 25°C (viscosity method: cone/plate rheometer CP-52 5rpm)
- MTM: methyltrimethoxysilane (containing an aminosilane adhesion promoter)
- TiCat: organotitanate catalyst
- SnCat: organotin catalyst
- Expandable graphite (EG): expandable graphite (ES350F5 from Graphitwerk Kropfmuehl AG)
- Aerosil 200: fumed silica supplied by Degussa
- Cloisite 30B (C30B): organo-clay mineral from Southern Clay

**Table 7 - Composition of Example 12 to 15**

| | Example 12 | Example 13 | Example 14 | Example 15 |
|---|---|---|---|---|
| PDMS-1 | 62.5% | 56.7% | - | - |
| PDMS-2 | - | - | 56.4% | 51.9% |
| MTM | 11% | 11.3% | 17.1% | 15.6% |
| SnCat | 1.5% | - | - | - |
| TiCat | - | 7% | 1.5% | 1.5% |
| EG | 25% | 25% | 25% | 25% |
| Cloisite 30B | - | - | - | 5% |
| Aerosil 200 | - | - | - | 1% |

Each of the intumescent coating compositions was applied to a steel plate at a thickness of 1.0 mm and allowed to cure overnight.

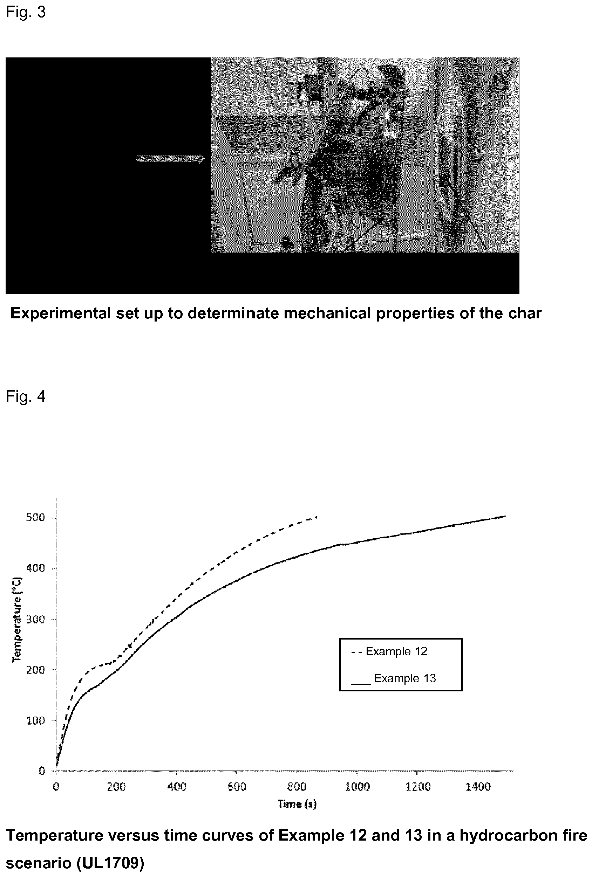

A small scale furnace test was developed in our laboratory to evaluate the fire performance of intumescent coatings in fire scenario and is depicted in Fig. 3 herein. The test was designed to mimic the UL1709 normalized temperature/time curve, related to a hydrocarbon fire. The lab-made furnace exhibited an internal volume of 26 dm³. Refractory fibres (stable up to 1300°C) were provided to cover the different faces of the furnace. The furnace was equipped with two gas burners (20kW propane burners). The gas pressure was fixed at 1.8 bars and the flow was regulated in order to mimic the UL1709 curve. During the test the coating is directly exposed to an electrical cone heater providing radiative heat (35kW/m²). When the expansion of the coating is maximal (after 5 min testing), air flow (25 m/s) impacts the char. By visual observation, it is possible to have an idea of the mechanical properties of the char and thus to check its cohesion. Indeed, if the char is fragile, it will be destroyed by the air impact whereas a strong char will not be affected by the air jet.

Figure 4 shows the evolution of temperature as a function of time on the backside of the steel plates coated with the example 12 and 13 formulations during hydrocarbon fire scenario.

The influence of the catalyst on the heat barrier properties of silicone based coating is clearly shown: the coating prepared with Ti based catalyst exhibits a better behaviour than the one prepared with Sn based catalyst. The time to reach 500°C for Example 12 and Example 13 are respectively 860s and 1500s demonstrating the better fire performance when titanium based catalyst is used (Table 8).

**Table 8 - Time to failure of Examples 12 and 13**

| | Example 12 | Example 13 |
|---|---|---|
| Time to reach 400 °C | 524 s | 685 s |
| Time to reach 500 °C | 850 s | 1460 s |

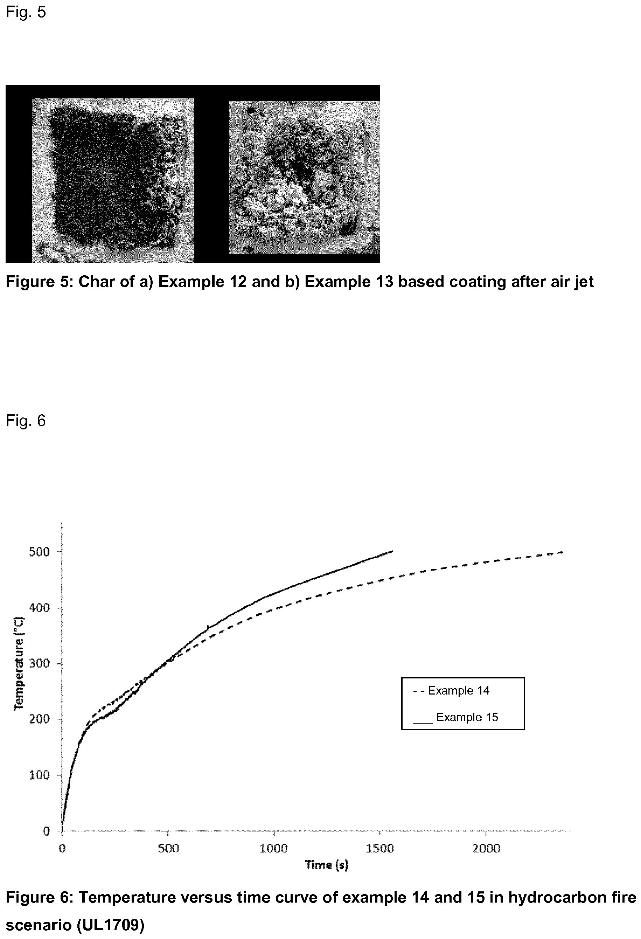

In order to highlight the better mechanical properties when titanium is used as catalyst, both formulations were tested using the air jet test described above. The resulting char of the two formulations is shown in Figure 5. When the air flow was switched on, a complete destruction of the char is observed for the Example 12 based coating whereas when titanium based catalyst (example 13) is used, the char is not affected by the air flow which indicates the example 13 coating has higher mechanical properties and good cohesion compared to example 12 and thus the better fire performance.

Figure 6 shows the evolution of temperature as a function of time on the backside of the steel plates coated with the example 14 and 15 formulations during a hydrocarbon fire scenario.

The influence of the fillers on the heat barrier properties of the composition coatings is clearly shown as the coating composition including cloisite and fumed silica exhibited (example 15) showed a much better behaviour than that prepared with just expandable graphite (example 14). The time to reach 500°C for Example 3 and Example 4 are respectively 1560s and 2375s demonstrating the better fire performance when the fillers are added (Table 9). After 220s fire testing, a knee point is visible for Example 1 based coating assigned to the low cohesion of the char during the fire experiment leading to lower insulation properties.

**Table. 9**

| | Example 3 | Example 4 |
|---|---|---|
| Time to reach 400 °C | 860s | 1030s |
| Time to reach 500 °C | 1560s | 2375s |

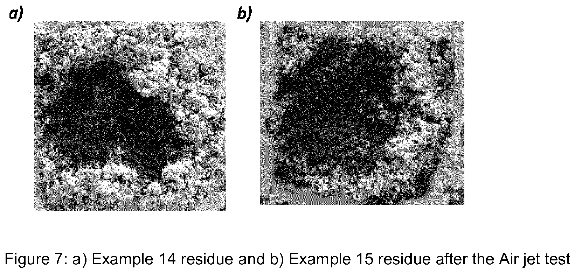

Figure 7 shows the example 14 and 15 residues after air impact. It highlights that when only expandable graphite is added to the coating composition, there is a complete destruction of the char around the air impact (the substrate is observed on the center of the picture). However, when cloisite 30B and Aerosil 200 are added to the silicone/EG based coating, the char is not completely destroyed by the air impact. This demonstrates improved mechanical properties of the char when cloisite and fumed silica are used as fillers and thus its better heat barrier properties.

## Claims

1. A process for protecting a metal, wood or plastics substrate exposed to fire risk from hydrocarbons, comprising coating the substrate with an intumescent composition comprising a polydimethylsiloxane (A) of degree of polymerisation at least 300 siloxane units, said polydimethylsiloxane containing reactive hydroxyl or hydrolysable groups bonded to silicon, and a crosslinking agent (B) containing hydrolysable groups reactive with the reactive groups of (A) in the presence of moisture, expandable graphite and a titanate catalyst for the reaction between the reactive hydroxyl or hydrolysable groups of polydimethylsiloxane (A) and the crosslinking agent (B)
**characterized in that** the composition comprises mineral fibres and also comprises at least a silica and/or clay or nanocomposite clay and
further **characterized in that** the composition does not contain an organic polymer or an organic resin.

2. A process for protecting a metal, wood or plastics substrate exposed to fire risk from hydrocarbons in accordance with claim 1 **characterised in that** the intumescent composition comprises a polydimethylsiloxane (A) of degree of polymerisation at least 300 siloxane units, said polydimethylsiloxane containing reactive hydroxyl or hydrolysable groups bonded to silicon, and a crosslinking agent (B) containing hydrolysable groups reactive with the reactive groups of (A) in the presence of moisture, expandable graphite, a titanate catalyst and one or more additives selected from the list of one or more additional intumescent agents such as silica, a silicone resin, inorganic fillers such as a boron compound, a fibrous filler and/or a reinforcing filler, and/or one or more flame retardants.

3. A process for protecting a metal, wood or plastics substrate exposed to fire risk from hydrocarbons in accordance with claim 1 **characterised in that** the intumescent composition consists of a polydimethylsiloxane (A) of degree of polymerisation at least 300 siloxane units, said polydimethylsiloxane containing reactive hydroxyl or hydrolysable groups bonded to silicon, and a crosslinking agent (B) containing hydrolysable groups reactive with the reactive groups of (A) in the presence of moisture, expandable graphite, a titanate catalyst and one or more additives selected from the list of one or more additional intumescent agents such as silica, a silicone resin, inorganic fillers such as a boron compound, a fibrous filler and/or a reinforcing filler, and/or one or more flame retardants.

4. A process for protecting a metal, wood or plastics substrate exposed to fire risk from hydrocarbons in accordance with any preceding claim **characterised in that**, exclusive of additives if present, the composition comprises from 25 weight (wt) % to 90 wt % by weight of polydimethylsiloxane (A) 0.5 wt % to 50 wt % crosslinking agent (B) and from 3 wt % to 40 wt % expandable graphite and 0.1 wt % to 5 wt % of a titanate catalyst with the total adding up to 100 wt%.

5. A process for protecting a metal, wood or plastics substrate exposed to fire risk from hydrocarbons in accordance with any preceding claim **characterised in that**, exclusive of additives if present, the composition comprises from 40 weight (wt) % to 80 wt % by weight of polydimethylsiloxane (A) 5 wt % to 30 wt % crosslinking agent (B) and from 7 wt % to 25 wt % expandable graphite and 0.1 wt % to 5 wt % of a titanate catalyst with the total adding up to 100 wt%.

6. A process according to any of Claims 1 to 4 wherein the expandable graphite forms 5 to 25 % by weight of the intumescent composition.

7. A process according to any of Claims 1 to 6 wherein the intumescent composition additionally contains a hydroxy-terminated phenyl silsesquioxane resin.

8. A process according to any of Claims 1 to 7 wherein the intumescent composition additionally contains silica coated by a silane.

9. A process according to any of Claims 1 to 8 wherein the intumescent composition additionally contains a boron compound selected from zinc borate, boric acid and ammonium tetraborate.

10. A process according to any of Claims 1 to 9 wherein the intumescent composition additionally contains silicon carbide fibres.

11. A process according to any of Claims 1 to 10 wherein the intumescent composition additionally contains at least one fire retardant additive selected from aluminium phosphinate, aluminium trihydroxide and magnesium dihydroxide.

12. A process according to any of Claims 1 to 11 wherein the intumescent composition additionally contains at least one reinforcing filler selected from titanium dioxide and calcium carbonate.

13. Use of an intumescent composition comprising a polydimethylsiloxane (A) of degree of polymerisation at least 300 siloxane units, said polydimethylsiloxane containing reactive hydroxyl or hydrolysable groups bonded to silicon, and a crosslinking agent (B) containing hydrolysable groups reactive with the reactive groups of (A) in the presence of moisture, and expandable graphite, in coating a metal, wood or plastics substrate to protect the substrate against fire damage by burning hydrocarbons while producing low smoke opacity **characterized in that** the composition comprises mineral fibres and also comprises at least a silica and/or clay or nanocomposite clay and
further **characterized in that** the composition does not contain an organic polymer or an organic resin.

## Patentansprüche

1. Verfahren zum Schutz eines Metall-, Holz- oder Kunststoffsubstrats, das einer Brandgefahr durch Kohlenwasserstoffe ausgesetzt ist, umfassend das Beschichten des Substrats mit einer intumeszierenden Zusammensetzung, umfassend ein Polydimethylsiloxan (A) mit einem Polymerisationsgrad von mindestens 300 Siloxaneinheiten, wobei das Polydimethylsiloxan reaktive Hydroxyl- oder hydrolysierbare Gruppen enthält, die an Silicium gebunden sind, und ein Vernetzungsmittel (B), das hydrolysierbare Gruppen, die mit den reaktiven Gruppen von (A) in Gegenwart von Feuchtigkeit reaktiv sind, Blähgraphit und einen Titanat-Katalysator für die Reaktion zwischen den reaktiven Hydroxyl- oder hydrolysierbaren Gruppen von Polydimethylsiloxan (A) und dem Vernetzungsmittel (B) enthält, **dadurch gekennzeichnet, dass** die Zusammensetzung Mineralfasern umfasst und auch mindestens ein Siliciumdioxid und/oder Ton oder einen Nanoverbundton umfasst, und ferner **dadurch gekennzeichnet, dass** die Zusammensetzung kein organisches Polymer oder organisches Harz enthält.

2. Verfahren zum Schutz eines Metall-, Holz- oder Kunststoffsubstrats, das einer Brandgefahr durch Kohlenwasserstoffe ausgesetzt ist, nach Anspruch 1, **dadurch gekennzeichnet, dass** die intumeszierende Zusammensetzung ein Polydimethylsiloxan (A) mit einem Polymerisationsgrad von mindestens 300 Siloxaneinheiten umfasst, wobei das Polydimethylsiloxan reaktive Hydroxyl- oder hydrolysierbare Gruppen enthält, die an Silicium gebunden sind, und ein Vernetzungsmittel (B) umfasst, das hydrolysierbare Gruppen, die mit den reaktiven Gruppen von (A) in Gegenwart von Feuchtigkeit reaktiv sind, Blähgraphit, einen Titanat-Katalysator und ein oder mehrere Additive enthält, ausgewählt aus der Liste von einem oder mehreren zusätzlichen Intumeszenzmitteln, wie Siliciumdioxid, ein Siliconharz, anorganische Füllstoffe, wie eine Borverbindung, ein faseriger Füllstoff und/oder ein verstärkender Füllstoff und/oder ein oder mehrere Flammschutzmittel.

3. Verfahren zum Schutz eines Metall-, Holz- oder Kunststoffsubstrats, das einer Brandgefahr durch Kohlenwasserstoffe ausgesetzt ist, nach Anspruch 1, **dadurch gekennzeichnet, dass** die intumeszierende Zusammensetzung aus einem Polydimethylsiloxan (A) mit einem Polymerisationsgrad von mindestens 300 Siloxaneinheiten, wobei das Polydimethylsiloxan reaktive Hydroxyl- oder hydrolysierbare Gruppen enthält, die an Silicium gebunden sind, und einem Vernetzungsmittel (B) besteht, das hydrolysierbare Gruppen, die mit den reaktiven Gruppen von (A) in Gegenwart von Feuchtigkeit reaktiv sind, Blähgraphit, einen Titanat-Katalysator und ein oder mehrere Additive enthält, ausgewählt aus der Liste von einem oder mehreren zusätzlichen Intumeszenzmitteln, wie Siliciumdioxid, ein Siliconharz, anorganische Füllstoffe, wie eine Borverbindung, ein faseriger Füllstoff und/oder ein verstärkender Füllstoff und/oder ein oder mehrere Flammschutzmittel.

4. Verfahren zum Schutz eines Metall-, Holz- oder Kunststoffsubstrats, das einer Brandgefahr durch Kohlenwasserstoffe ausgesetzt ist, nach einem der vorhergehenden Ansprüche, **dadurch gekennzeichnet, dass** die Zusammensetzung, mit Ausnahme von Additiven, falls vorhanden, 25 Gew.-% bis 90 Gew.-% Polydimethylsiloxan (A), 0,5 Gew.-% bis 50 Gew.-% Vernetzungsmittel (B) und 3 Gew.-% bis 40 Gew.-% Blähgraphit und 0,1 Gew.-% bis 5 Gew.-% eines Titanatkatalysators umfasst, wobei sich die Gesamtmenge auf 100 Gew.-% addiert.

5. Verfahren zum Schutz eines Metall-, Holz- oder Kunststoffsubstrats, das einer Brandgefahr durch Kohlenwasserstoffe ausgesetzt ist, nach einem der vorhergehenden Ansprüche, **dadurch gekennzeichnet, dass** die Zusammensetzung, mit Ausnahme von Additiven, falls vorhanden, 40 Gew.-% bis 80 Gew.-% Polydimethylsiloxan (A), 5 Gew.-% bis 30 Gew.-% Vernetzungsmittel (B) und 7 Gew.-% bis 25 Gew.-% Blähgraphit und 0,1 Gew.-% bis 5 Gew.-% eines Titanatkatalysators umfasst, wobei sich die Gesamtmenge auf 100 Gew.-% addiert.

6. Verfahren nach einem der Ansprüche 1 bis 4, wobei der Blähgraphit 5 bis 25 Gew.-% der intumeszierenden Zusammensetzung bildet.

7. Verfahren nach einem der Ansprüche 1 bis 6, wobei die intumeszierende Zusammensetzung zusätzlich ein Hydroxy-terminiertes Phenylsilsesquioxanharz enthält.

8. Verfahren nach einem der Ansprüche 1 bis 7, wobei die intumeszierende Zusammensetzung zusätzlich Siliciumdioxid enthält, das mit einem Silan beschichtet ist.

9. Verfahren nach einem der Ansprüche 1 bis 8, wobei die intumeszierende Zusammensetzung zusätzlich eine Borverbindung enthält, die ausgewählt ist aus Zinkborat, Borsäure und Ammoniumtetraborat.

10. Verfahren nach einem der Ansprüche 1 bis 9, wobei die intumeszierende Zusammensetzung zusätzlich Siliciumcarbidfasern enthält.

11. Verfahren nach einem der Ansprüche 1 bis 10, wobei die intumeszierende Zusammensetzung zusätzlich mindestens ein feuerhemmendes Additiv, ausgewählt aus Aluminiumphosphinat, Aluminiumtrihydroxid und Magnesiumdihydroxid, enthält.

12. Verfahren nach einem der Ansprüche 1 bis 11, wobei die intumeszierende Zusammensetzung zusätzlich mindestens einen verstärkenden Füllstoff, ausgewählt aus Titandioxid und Calciumcarbonat, enthält.

13. Verwendung einer intumeszierenden Zusammensetzung, umfassend ein Polydimethylsiloxan (A) mit einem Polymerisationsgrad von mindestens 300 Siloxaneinheiten, wobei das Polydimethylsiloxan reaktive Hydroxyl- oder hydrolysierbare Gruppen, die an Silicium gebunden sind, enthält, und ein Vernetzungsmittel (B), das hydrolysierbare Gruppen, die mit den reaktiven Gruppen von (A) in Gegenwart von Feuchtigkeit reaktiv sind, und Blähgraphit enthält, beim Beschichten eines Metall-, Holz- oder Kunststoffsubstrats, um das Substrat gegen Brandschäden durch Verbrennen von Kohlenwasserstoffen zu schützen, während eine geringe Rauchtrübung erzeugt wird, **dadurch gekennzeichnet, dass** die Zusammensetzung Mineralfasern umfasst und auch mindestens ein Siliciumdioxid und/oder Ton oder einen Nanoverbundton umfasst, und ferner **dadurch gekennzeichnet, dass** die Zusammensetzung kein organisches Polymer oder organisches Harz enthält.

## Revendications

1. Procédé destiné à la protection d'un substrat en métal, en bois ou en plastique exposé au risque d'incendie associé à des hydrocarbures, comprenant le revêtement du substrat avec une composition intumescente comprenant un polydiméthylsiloxane (A) de degré de polymérisation d'au moins 300 unités de silhoxane, ledit polydiméthylsiloxane contenant des groupes hydroxyle ou hydrolysables réactifs liés au silicium, et un agent de réticulation (B) contenant des groupes hydrolysables réactifs avec les groupes réactifs de (A) en présence d'humidité, de graphite expansible et d'un catalyseur de titanate pour la réaction entre les groupes hydroxyle ou hydrolysables réactifs (A) et l'agent de réticulation (B), **caractérisé en ce que** la composition comprend des fibres minérales et comprend également au moins une silice et/ou une argile ou une argile nanocomposite, et **caractérisé en outre en ce que** la composition ne contient pas de polymère organique ni de résine organique.

2. Procédé destiné à la protection d'un substrat en métal, en bois ou en plastique exposé au risque d'incendie associé à des hydrocarbures selon la revendication 1, **caractérisé en ce que** la composition intumescente comprend un polydiméthylsiloxane (A) de degré de polymérisation d'au moins 300 unités de siloxane, ledit polydiméthylsiloxane contenant des groupes hydroxyle ou hydrolysables réactifs liés au silicium, et un agent de réticulation (B) contenant des groupes hydrolysables réactifs avec les groupes réactifs de (A) en présence d'humidité, de graphite expansible, d'un catalyseur de titanate et d'un ou de plusieurs additifs sélectionnés dans la liste constituée par un ou plusieurs agents intumescents supplémentaires tels que la silice, une résine de silicone, des charges inorganiques telles qu'un composé de bore, une charge fibreuse et/ou une charge renforçante, et/ou un ou plusieurs ignifugeants.

3. Procédé destiné à la protection d'un substrat en métal, en bois ou en plastique exposé au risque d'incendie associé à des hydrocarbures selon la revendication 1, **caractérisé en ce que** la composition intumescente est constituée d'un polydiméthylsiloxane (A) de degré de polymérisation d'au moins 300 unités de siloxane, ledit polydiméthylsiloxane contenant des groupes hydroxyle ou hydrolysables réactifs liés au silicium, et un agent de réticulation (B) contenant des groupes hydrolysables réactifs avec les groupes réactifs de (A) en présence d'humidité, de graphite expansible, d'un catalyseur de titanate et d'un ou de plusieurs additifs sélectionnés dans la liste constituée par un ou plusieurs agents intumescents supplémentaires tels que la silice, une résine de silicone, des charges inorganiques telles qu'un composé de bore, une charge fibreuse et/ou une charge renforçante, et/ou un ou plusieurs ignifugeants.

4. Procédé destiné à la protection d'un substrat en métal, en bois ou en plastique exposé au risque d'incendie associé à des hydrocarbures selon une quelconque revendication précédente, **caractérisé en ce que**, à l'exclusion des additifs le cas échéant, la composition comprend de 25 % en poids (pds) à 90 % en poids de polydiméthylsiloxane (A), de 0,5 % en poids à 50 % en poids d'agent de réticulation (B), de 3 % en poids à 40 % en poids de graphite expansible, et de 0,1 % en poids à 5 % en poids d'un catalyseur de titanate, le total étant égal à 100 % en poids.

5. Procédé destiné à la protection d'un substrat en métal, en bois ou en plastique exposé au risque d'incendie associé à des hydrocarbures selon une quelconque revendication précédente, **caractérisé en ce que**, à l'exclusion des additifs le cas échéant, la composition comprend de 40 % en poids (pds) à 80 % en poids de polydiméthylsiloxane (A), de 5 % en poids à 30 % en poids d'agent de réticulation (B), de 7 % en poids à 25 % en poids de graphite expansible, et de 0,1 % en poids à 5 % en poids d'un catalyseur de titanate, le total étant égal à 100 % en poids.

6. Procédé selon l'une quelconque des revendications 1 à 4, dans lequel le graphite expansible forme 5 à 25 % en poids de la composition intumescente.

7. Procédé selon l'une quelconque des revendications 1 à 6, dans lequel la composition intumescente contient en outre une résine phénylsilsesquioxane à terminaison hydroxy.

8. Procédé selon l'une quelconque des revendications 1 à 7, dans lequel la composition intumescente contient en outre de la silice enrobée par un silane.

9. Procédé selon l'une quelconque des revendications 1 à 8, dans lequel la composition intumescente contient en outre un composé de bore sélectionné parmi le borate de zinc, l'acide borique et le tétraborate d'ammonium.

10. Procédé selon l'une quelconque des revendications 1 à 9, dans lequel la composition intumescente contient en outre des fibres de carbure de silicium.

11. Procédé selon l'une quelconque des revendications 1 à 10, dans lequel la composition intumescente contient en outre au moins un additif ignifuge sélectionné parmi le phosphinate d'aluminium, le trihydroxyde d'aluminium et le dihydroxyde de magnésium.

12. Procédé selon l'une quelconque des revendications 1 à 11, dans lequel la composition intumescente contient en outre au moins une charge renforçante sélectionnée parmi le dioxyde de titane et le carbonate de calcium.

13. Utilisation d'une composition intumescente comprenant un polydiméthylsiloxane (A) de degré de polymérisation d'au moins 300 unités de siloxane, ledit polydiméthylsiloxane contenant des groupes hydroxyle ou hydrolysables réactifs liés au silicium, et un agent de réticulation (B) contenant des groupes hydrolysables réactifs avec les groupes réactifs de (A) en présence d'humidité et de graphite expansible, dans le revêtement d'un substrat en métal, en bois ou en plastique pour protéger le substrat contre les dommages causés par le feu en brûlant des hydrocarbures tout en produisant une faible opacité de fumée, **caractérisée en ce que** la composition comprend des fibres minérales et comprend également au moins une silice et/ou une argile ou une argile nanocomposite, et **caractérisée en outre en ce que** la composition ne contient pas de polymère organique ni de résine organique.
